# EUROPÄISCHE PATENTANMELDUNG

(11) **EP 1 967 978 A1**
(43) Veröffentlichungstag der Anmeldung: **10.09.2008**
(21) Anmeldenummer: 08004140.3
(22) Anmeldetag: 06.03.2008
(51) Int. Cl.: G06F 21/02

(54) **Speichereinheit zur manipulationssicheren Ablage und Wiedergabe von digitalen Daten in der Verkehrsüberwachungstechnik**

(30) Priorität: 09.03.2007 DE 202007003722 U
(71) Anmelder: ROBOT Visual Systems GmbH, 40789 Monheim (DE)
(72) Erfinder: Behrens, Andreas, 40764 Langenfeld (DE)
(74) Vertreter: Oehmke, Volker

(57) **Zusammenfassung**

Die Erfindung betrifft eine Speichereinheit, die ein manipulationssicheres Ablegen und Wiedergeben von digitalen Daten ermöglicht.

Der Erfindung liegt die Aufgabe zugrunde, eine Möglichkeit zu schaffen, ohne die Verwendung von WORM-Medien manipulationssicher digitale Daten, insbesondere auch unter rauhen Umgebungsbedingungen, beispielsweise wie hohe Luftfeuchtigkeit, Erschütterungen, Staub usw., abzulegen und langfristig wiederzugeben.

Diese Aufgabe wird durch Speichereinheit zur manipulationssicheren Ablage und Wiedergabe von digitalen Daten in der Verkehrsüberwachungstechnik dadurch gelöst, dass in einem gekapselten Gehäuse ein nichtflüchtiger Speicher (4), ein mit diesem in Verbindung stehender Controller (3) und eine mit dem Controller (3) in Verbindung stehende Schnittstelle (2), über die mit anderen Systemen eine Kommunikation möglich ist, vorhanden sind.

## Beschreibung

Als einmal beschreibbare Speicher, oder auch permanente Speicher genannt, finden im Stand der Technik sogenannte WORM-Medien Anwendung (WORM = Write Once Read Multiple). Typischerweise handelt es sich hierbei um optomagnetische Medien, die bedingt durch ihre Bauart in einem WORM-Laufwerk nur einmal beschrieben und beliebig oft ausgelesen werden können. Die WORM-Technologien haben alle als Aufgabe, Schreibschutz für Speichermedien zu erzeugen. Die so eingeschriebenen Daten sollen anschließend weder abgeändert noch überschrieben oder gelöscht werden können. Auch nur einmal beschreibbare CD- oder DVD-Medien können als WORM-Medien verstanden werden. Ein von vielen Anwendungsgebieten der WORM-Medien sind alle Arten von digitalen Archiven, so auch in der Verkehrsüberwachungstechnik.

Aufgrund der hohen Empfindlichkeit im Vergleich zu anderen Speichermedien und insbesondere der eingeschränkten Betriebstemperaturbereiche der zugehörigen Laufwerke sind diese WORM-Medien für Anwendungen, die den natürlichen Temperaturschwankungen der Umwelt ausgesetzt sind, nur beschränkt geeignet.

Ob es sich um Geräte für einen temporären Einsatz oder stationäre Geräte handelt, sie müssen innerhalb eines Temperaturbereiches zwischen -30 °C und +60 °C sowie bei Schwankungen über diesen Temperaturbereich zuverlässig arbeiten. Ihre Ausstattung mit einem nur einmal beschreibbaren Speicher ist zur Gewährleistung einer beweis- und manipulationssicheren Datenerfassung und -wiedergabe eine zwingende Voraussetzung für die Zulassung derartiger Geräte.

Der Erfindung liegt die Aufgabe zugrunde, eine Möglichkeit zu schaffen, ohne die Verwendung von WORM-Medien manipulationssicher digitale Daten, insbesondere auch unter rauhen Umgebungsbedingungen, beispielsweise wie hohe Luftfeuchtigkeit, Erschütterungen, Staub usw., abzulegen und langfristig wiederzugeben.

Vorteilhafte Weiterbildungen sind in den Unteransprüchen beschrieben.

Die Erfindung soll nachstehend anhand von Ausführungsbeispielen näher erläutert werden. Die dazugehörige Zeichnung zeigt:

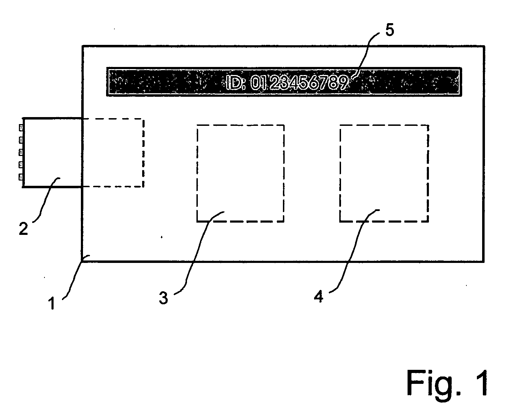

- Fig. 1: einen schematischen Aufbau einer erfindungsgemäßen Speichereinheit

In Fig. 1 ist eine vorteilhafte Ausführungsform einer einmal beschreibbaren Speichereinheit 1, mit ihren wesentlichen Einheiten, der Schnittstelle 2, dem Controller 3 und dem nichtflüchtigen Speicher 4, gezeigt. Der nichtflüchtige Speicher 4 ist dabei ein semi-permanenter Speicher/Halbleiterspeicher mit oder ohne einem internem Controller, vorzugsweise einem Flashspeicher, der einmal eingeschriebene Daten zwar dauerhaft speichert, die jedoch geändert oder gelöscht werden könnten. Der Controller 3 ist deshalb so ausgelegt, dass sämtliche über die Schnittstelle 2 eingehende digitale Daten im Speicher 4 abgelegt werden können, er verhindert jedoch das Ändern oder das Löschen dieser eingeschriebenen Daten oder gar das Formatieren des Speichers 4. Der Controller 3 stellt dazu jedem über die Schnittstelle 2 verbundenen System die Befehle bereit, mit denen es möglich ist, die Daten abzulegen. Der Controller 3 kann ferner ein übliches Filesystem, z. B. im FAT 16- oder FAT 32-Format bereitstellen, das vom Betriebssystem des verbundenen Systems unterstützt wird. Das verbundene System ist im einfachsten Fall ein PC und die Schnittstelle 2 ist als USB-Schnittstelle ausgebildet. Die bereits eingeschriebenen Daten können somit über die USB-Schnittstelle beliebig oft und zu jedem beliebigen Zeitpunkt auf dem PC dargestellt werden. Der Controller 3 stellt gleichzeitig jedoch sicher, dass eine Änderung der Daten im nichtflüchtigen Speicher 4 sowohl durch den angeschlossenen PC als auch durch jedwedes andere angeschlossene System unmöglich ist.

Zur weiteren Erhöhung der Sicherstellung der Unabänderbarkeit der eingeschriebenen Daten ist das Gehäuse der Speichereinheit 1 verkapselt ausgeführt und kann nur durch sichtbare Zerstörungsspuren geöffnet werden, um so an den semi-permeablen Speicher 4 zu kommen, um unter Umgehung des eingebauten Controllers 3 doch die Daten zu ändern oder zu löschen.

Ferner ist es vorteilhaft, die Speichereinheit 1 mit einer eineindeutigen Codierung auszustatten. Dies kann dadurch realisiert werden, dass außen am Gehäuse ein Code 5 angebracht wird. In einer bevorzugten Ausführungsform wird im Speicher 4 derselbe Code 5, der außen am Gehäuse angebracht ist, abgelegt. Ein Hologramm als Codierung, das vorzugsweise aufklebbar ist, kann weitere Fälschungssicherheit bringen. Die Codierung kann auch dazu genutzt werden, dass sie als Schlüssel zur Inbetriebnahme eines Verkehrsüberwachungssystems erforderlich ist, d. h. erst wenn die Speichereinheit 1 über eine am Verkehrsüberwachungssystem vorhandene Schnittstelle 2 angeschlossen wird, lässt sich dieses in Betrieb nehmen.

In einer besonderen Ausführungsform kann der Speicher 4, vorzugsweise ein handelsüblicher Flashspeicher wie beispielsweise eine SD-Karte, in einem dafür vorgesehenen Aufnahmeschacht im Gehäuse entnehmbar eingesteckt und versiegelt sein. Hierzu kann vorzugsweise ebenfalls ein aufklebbares Hologramm eingesetzt werden. Dadurch ergibt sich der Vorteil, dass bei einem breitflächigen Einsatz in einer zentralen zugelassenen Stelle ein kontrollierter Austausch des Speichers 4 mit anschließender Versiegelung vorgenommen werden kann. Hierdurch können die Kosten der Speichereinheit 1 reduziert werden, da eine Speichereinheit 1 mit einer Vielzahl preiswerter Speicherkarten eingesetzt werden kann. Eine weitere Ausgestaltung besteht darin, dass die Konfigurationsdaten für das Verkehrsüberwachungsgerät neben den Bild- und Messdaten in den Speicher 4 abgelegt werden.

Die Stromversorgung für die Speichereinheit 1 kann über die Schnittstelle 2 oder über einen zusätzlichen Eingang mittels eines Netzteils erfolgen.

Eine weitere Ausgestaltung des Speichers 4 ist dahingehend möglich, dass ein an sich flüchtiger Speicher, ein sogenannter RAM, eingesetzt wird und über eine ebenfalls eingebaute Batterie über die Lebenszeit der Batterie gepuffert wird. Eine Ladezustandskontrollmöglichkeit sollte dann allerdings integriert sein, da beim Leerzustand der Batterie die Daten aus dem flüchtigen Speicher unwiederherstellbar verloren sind.

In einer weiterführenden Ausführungsform können die gewünschten Einsatzbedingungen des Verkehrsüberwachungssystems zusätzlich abgesichert werden. Dazu kann die Speichereinheit 1 mit Daten derart vorkonfiguriert werden, dass das Überwachungssystem nur an einem bestimmten Ort und/oder zu einer bestimmten Zeit und/oder zu einem bestimmten Zweck und/oder von einer bestimmten Person betrieben werden kann. Hierzu müssen von der Person, üblicherweise einem Bediensteten der Verkehrsüberwachungsbehörde, Parameter in das mit dem Speicher 4 verbundene System eingegeben werden, die mit den durch die Vorkonfiguration im Speicher 4 abgelegten Daten verglichen werden. Über Satellit (z. B. mit dem GPS) kann die Position und die Uhrzeit am Aufstellort des Überwachungssystems bestimmt werden und mit den vorkonfigurierten Daten im Speicher 4 verglichen werden. Erst nach erfolgreicher Verifikation der Daten kann das Überwachungssystem in Betrieb genommen werden. Somit kann neben dem manipulationssicheren Ablegen und Wiedergeben der Daten auch ein ungewollter Betrieb des Gesamtsystems verhindert werden.

Aufstellung der verwendeten Bezugszeichen
- 1.: Speichereinheit
- 2.: Schnittstelle
- 3.: Controller
- 4.: Speicher
- 5.: Code

## Patentansprüche

1. Speichereinheit zur manipulationssicheren Ablage und Wiedergabe von digitalen Daten in der Verkehrsüberwachungstechnik, **dadurch gekennzeichnet, dass** in einem gekapselten Gehäuse ein nichtflüchtiger Speicher (4), ein mit diesem in Verbindung stehender Controller (3) und eine mit dem Controller (3) in Verbindung stehende Schnittstelle (2), über die mit anderen Systemen eine Kommunikation möglich ist, vorhanden sind.

2. Speichereinheit nach Anspruch 1, **dadurch gekennzeichnet, dass** der nichtflüchtige Speicher (4) ein semi-permanenter Speicher ist.

3. Speichereinheit nach Anspruch 1, **dadurch gekennzeichnet, dass** der nichtflüchtige Speicher (4) ein flüchtiger Speicher ist, wobei dieser ständig mit einer Stromversorgung in Verbindung steht.

4. Speichereinheit nach einem der vorhergehenden Ansprüche, **dadurch gekennzeichnet, dass** das gekapselte Gehäuse mit einer Codierung versehen ist.

5. Speichereinheit nach Anspruch 4, **dadurch gekennzeichnet, dass** die Codierung des gekapselten Gehäuses im Speicher (4) abgelegt ist.

6. Speichereinheit nach einem der vorhergehenden Ansprüche, **dadurch gekennzeichnet, dass** die Codierung ein Hologramm ist.

7. Speichereinheit nach einem der vorhergehenden Ansprüche, **dadurch gekennzeichnet, dass** die Schnittstelle (2) eine USB-Schnittstelle ist.

8. Speichereinheit nach einem der vorhergehenden Ansprüche, **dadurch gekennzeichnet, dass** der Controller (3) kein Formatieren der Speichereinheit (1) zulässt.

9. Speichereinheit nach einem der vorhergehenden Ansprüche, **dadurch gekennzeichnet, dass** der Controller (3) nur ein Ablegen von digitalen Daten im Speicher (4) zulässt, hingegen eine Änderung oder gar Löschung der eingeschriebenen Daten verhindert.

10. Speichereinheit nach einem der vorhergehenden Ansprüche, **dadurch gekennzeichnet, dass** der Controller (3) die abgelegten Daten an ein angeschlossenes System über die Schnittstelle (2) weiterleitet, ohne dabei die abgelegten Daten zu ändern.

11. Speichereinheit nach einem der vorhergehenden Ansprüche, **dadurch gekennzeichnet, dass** der Controller (3), der über die Schnittstelle (2) mit einem Verkehrsüberwachungssystem verbunden ist, neben dem Ablegen der digitalisierten Bild- und Messdaten auch das Ablegen der Konfigurationsdaten des Verkehrsüberwachungssystems zulässt.

12. Speichereinheit nach Anspruch 11, **dadurch gekennzeichnet, dass** das an die Speichereinheit (1) angeschlossene Verkehrüberwachungssystem erst durch Erhalt seiner Konfigurationsdaten aus dem Speicher (4) gestartet wird.

13. Speichereinheit nach Anspruch 1, **dadurch gekennzeichnet, dass** das gekapselte Gehäuse einen Aufnahmeschacht für Flashspeicher aufweist, wobei der Aufnahmeschacht mit einer Versiegelungseinrichtung versehen ist, so dass der Flashspeicher nicht unbemerkt entnommen werden kann.

14. Speichereinheit nach Anspruch 13, **dadurch gekennzeichnet, dass** der Aufnahmeschacht ein Cardreader ist.

15. Speichereinheit nach Anspruch 13 oder 14, **dadurch gekennzeichnet, dass** der Flashspeicher eine SD-Karte ist.
